# EUROPEAN PATENT APPLICATION

(11) **EP 2 665 226 A2**
(43) Date of publication of application: **20.11.2013**
(21) Application number: 13167219.8
(22) Date of filing: 10.05.2013
(51) Int. Cl.: H04L 12/26, H04L 12/24

(54) **Network analysis tool**

(30) Priority: 16.05.2012 FI 20125524
(71) Applicant: EXFO Oy, 90570 Oulu (FI)
(72) Inventor: Sankala, Jouko, 90570 Oulu (FI); Axelsson, Jorma, 90570 Oulu (FI)
(74) Representative: Kolster Oy Ab

(57) **Abstract**

A method, apparatus, and computer program for network analysis are provided. The method comprises: outputting, in a network analysis tool, display content comprising a layout of the communication network comprising network elements in the form of a plurality of network nodes and a plurality of communication interfaces connecting the plurality of network nodes, the display content further comprising compressed application information associated with at least one of the network elements, wherein the compressed application information indicates what type of user application data traffic is currently transferred through said at least one of the network elements; receiving an input to select at least one of the displayed network elements; and outputting, as a response to the input, detailed application information of the selected at least one of the displayed network elements.

## Description

### Field

The invention relates to the field of communication network analysis and diagnostics and, particularly, to a solution for monitoring performance of a communication network.

### Background

A network analysis tool may be connected to an operational communication network to monitor and/or test the performance of the communication network. The network analysis tool may be a computer-based apparatus provided with communication capability, and the network analysis tool may connect to the communication network in order to acquire performance data from the communication network. The network analysis tool may further be connected to a user interface in order to output the acquired performance data to an operator of the network analysis tool.

### Brief description

According to an aspect of the present invention, there is provided a method as specified in claim 1.

According to another aspect of the present invention, there is provided an apparatus as specified in claim 7.

According to yet another aspect of the present invention, there is provided a computer program product embodied on a computer readable distribution medium as specified in claim 11.

Embodiments of the invention are defined in the dependent claims.

### List of drawings

Embodiments of the present invention are described below, by way of example only, with reference to the accompanying drawings, in which
Figure 1 illustrates display content of a network analysis tool according to an embodiment of the invention;
Figure 2 is a flow diagram of a method for processing display content in the network analysis tool according to an embodiment of the invention;
Figure 3 illustrates display content of a network analysis tool according to another embodiment of the invention;
Figures 4 to 6 illustrates an embodiment of detailed display content according to an embodiment of the invention; and
Figure 7 is a block diagram of a structure of an apparatus according to an embodiment of the invention.

### Description of embodiments

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

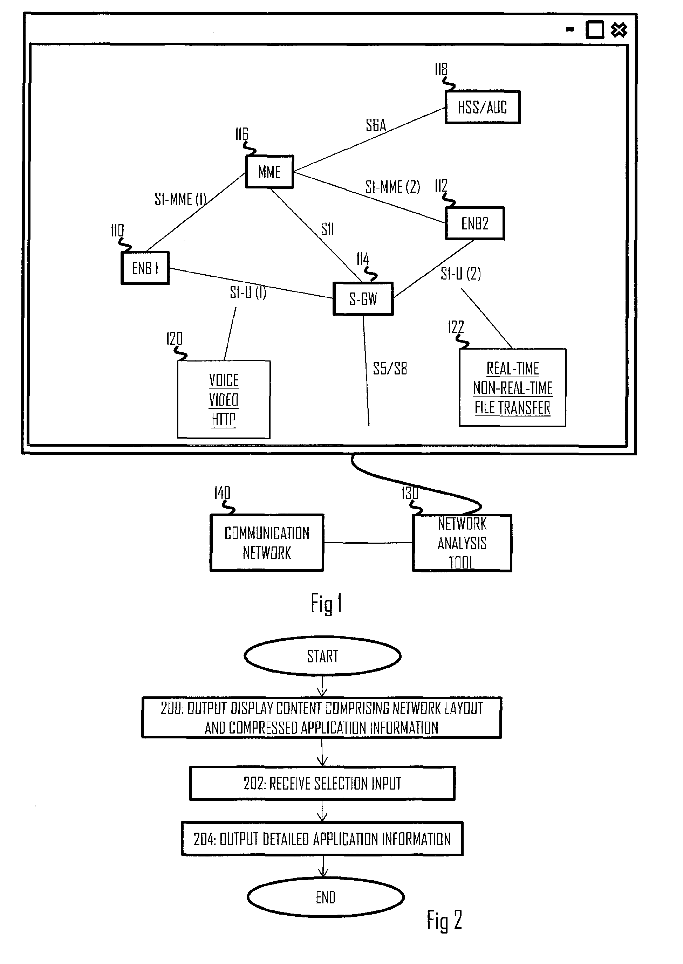

Figure 1 illustrates an example of a network analysis tool 130 and display content output by the network analysis tool 130. The network analysis tool 130 may be connected to a communication network 140 which may be an operational communication network. Examples of the communication network 140 include a fixed network infrastructure of a mobile or cellular communication network, e.g. Universal Mobile Telecommunication System or any one of its evolution versions (High-Speed Packet Access, HSPA, Long-Term Evolution, LTE, LTE-Advanced). Further examples of the communication network 140 include internet protocol (IP) or transport control protocol / internet protocol (TCP/IP) based networks, Ethernet networks, synchronous optical networking (SONET) networks, synchronous digital hierarchy (SDH), or other optical fibre networks, asynchronous transfer mode (ATM) based networks, and so on. Basically, the network analysis tool 130 may be connected to any wired network and, in some embodiments, the network analysis tool may even be used in the analysis of infrastructureless wireless networks, e.g. mobile ad hoc networks (MANET), or hybrid networks comprising infrastructure parts and infrastructureless parts.

The network analysis tool 130 may acquire from the communication network 140 information on the data transferred in the communication network 140 and on network elements of the communication network 140. The information on the data transferred in the communication network 140 may comprise performance data and application type data. The performance data may comprise performance characteristics in different parts of the communication network 140, while the application type data may comprise information on the type of user applications executed in user terminals of the communication network 140 and transferring data over the communication network 140. The network analysis tool 130 may then output at least some of the acquired information as display content through the user interface of an apparatus comprising the network analysis tool.

Figure 1 illustrates an example of the display content output by the network analysis tool. The display content may be displayed on a display screen, e.g. a display monitor, connected to the network analysis tool through a display interface such as digital visual interface (DVI), video graphics array (VGA), and/or high-definition multimedia interface (HDMI). The display content comprises a layout of the communication network 140 connected to the network analysis tool 130. The network layout illustrates network elements of the communication network 140. The network elements comprise a plurality of network nodes 110, 112, 114, 116, 118 representing structural entities of the communication network. The network elements further comprise a plurality of communication interfaces connecting the plurality of network nodes 110 to 118. The communication interfaces represent both structural and functional interfaces used by the network nodes 110 to 118 to communicate with each other. Each communication interface may be defined by the structure, e.g. electrical connection or optical connection, and by a communication protocol. Figure 1 illustrates display content of an UMTS LTE communication network comprising base stations (evolved Node B or eNB) 110, 112, a mobility management entity (MME) 116 connected to the eNBs 110 112 via S1-MME interfaces, a serving gateway (S-GW) 114 connected to the eNBs 110, 112 via S1-U interfaces and configured to route user plane data, and a home subscriber server / authentication centre (HSS/AUC) 118 connected to the MME 116 via an S6A interface. Furthermore, an S5 or S8 interface may connect the S-GW 114 to other network nodes of the communication network 140 for routing the user plane data.

The network analysis tool 130 may be configured to monitor the user plane traffic in the communication network 140. For that purpose, the network analysis tool 130 may output as the display content information related to the user plane traffic. The user plane traffic may be defined as data traffic generated by a user application executed in a user terminal and transferred through the communication network 140. The user plane traffic may be uplink traffic or downlink traffic. The communication network may comprise separate communication protocol stacks for control plane traffic and user plane traffic, and the network analysis tool may be configured to output as the display content information related to only the user plane traffic or information related to the user plane traffic and the control plane traffic. Referring to Figure 1, such information may comprise compressed application information associated with at least one of the network elements, e.g. network nodes 110 to 118 and/or interfaces. The compressed application information may indicate what type of user application data traffic is currently transferred through said at least one of the network elements. Figure 1 illustrates the compressed application information in the form of text boxes 120, 122, wherein each text box comprises in textual form application groups or application types routing currently data traffic through the corresponding network element. For example, a first text box 120 illustrates that voice traffic, video traffic, and hypertext transport protocol (http) traffic is transferred through a first S1-U interface S1-U(1), while a second text box 122 illustrates that real-time traffic, non-real-time traffic, and file transfer traffic is transferred through a second S1-U interface S1-U(2).

In an embodiment, the compressed application information is defined in terms that are common to a plurality of different user applications. Such classification may be based on common quality of service (QoS) requirements, e.g. real time requirement or lack of real time requirement (non-real-time data traffic), or, the classification may be based on a common application class or application group, e.g. video streaming, voice conversation, video telephony, internet browsing, or file download or upload.

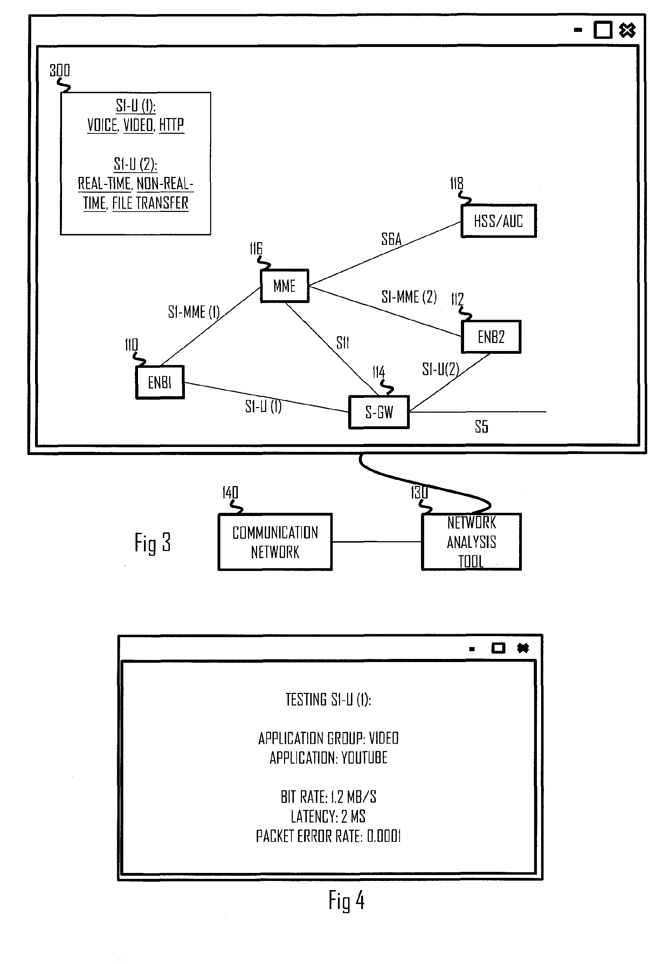

In an embodiment, the compressed application information associated with a network element is visually connected to the network element in the display content. In the embodiment of Figure 1, the text boxes 120, 122 are connected to the respective interfaces S1-U(1) and S1-U(2) by using visual connectors in the form of lines, but it should be appreciated that the visual connection between the compressed application information and the corresponding network element may be realized in other ways. In an embodiment, compressed application information associated with a network node 110 to 118 is displayed in the same box that represents the network node 110 to 118 itself. In another embodiment, the visual connection is realized by selecting the location of the compressed application information, e.g. the location of the text box 120, 122, to be next to the corresponding network element. In yet another embodiment (see Figure 3), an identifier of the network element is displayed next to the compressed application information of the network element. The identifier and the compressed application information may be displayed in the same text box 300.

Figure 2 illustrates an embodiment of a process carried out by the network analysis tool 130. The process may be realized as a computer program executed in the network analysis tool 130. Referring to Figure 2, the network analysis tool 130 outputs in block 200 display content comprising the layout of the communication network 140 comprising the network elements in the form of a plurality of network nodes 110 to 118 and a plurality of communication interfaces connecting the plurality of network nodes. The display content further comprises compressed application information 120, 122 associated with at least one of the network elements, wherein the compressed application information indicates what type of user application data traffic is currently transferred through said at least one of the network elements in the communication network 140.

In block 202, an input is received, wherein the input indicates selection of at least one of the displayed network elements. In response to the selection input, the network analysis tool outputs in block 204 detailed application information of the selected at least one of the displayed network elements.

An advantage of this embodiment is that the network analysis tool 130 may be used in monitoring performance of individual applications or application groups in anywhere in the communication network. For example, the operator may select to monitor the performance of a determined application in any one or more of the network elements.

The detailed application information may comprise more detailed information on one or more of the applications using the communication network 140 than what the compressed application information comprises. The detailed application information may comprise more information than the compressed application information or it may comprise information on a more detailed level, e.g. information related to an individual application instead of an application group. In an embodiment, the detailed application information specifies at least one of a user application transferring data traffic through the selected network element and performance characteristics of the user application on at least one protocol layer.

Let us now refer to Figure 4 illustrating an embodiment of the detailed application information displayed in response to the selection input, wherein the operator of the network analysis tool has selected the S1-U(1) interface and, furthermore, the video application group by clicking on word "Video" in the display content of Figure 1 or 3. The visual linking between the compressed application information and the corresponding network element may thus be used to select both the network element and the application information the operator wants to monitor with greater detail. Referring to Figure 4, the detailed application information may comprise performance characteristics of the selected application information. The performance characteristics may comprise QoS performance characteristics of the selected network element, e.g. bit rate, latency, packet error rate, and/or bit error rate. The detailed application information may illustrate the performance characteristics of an individual user application, e.g. Youtube application as shown in Figure 4, or average performance characteristics of an application group comprising a plurality of applications. In the case of the application group being the video application group, the detailed application information may comprise averaged performance characteristics of a plurality of video applications, e.g. the Youtube, IP television application, and a movie rental application.

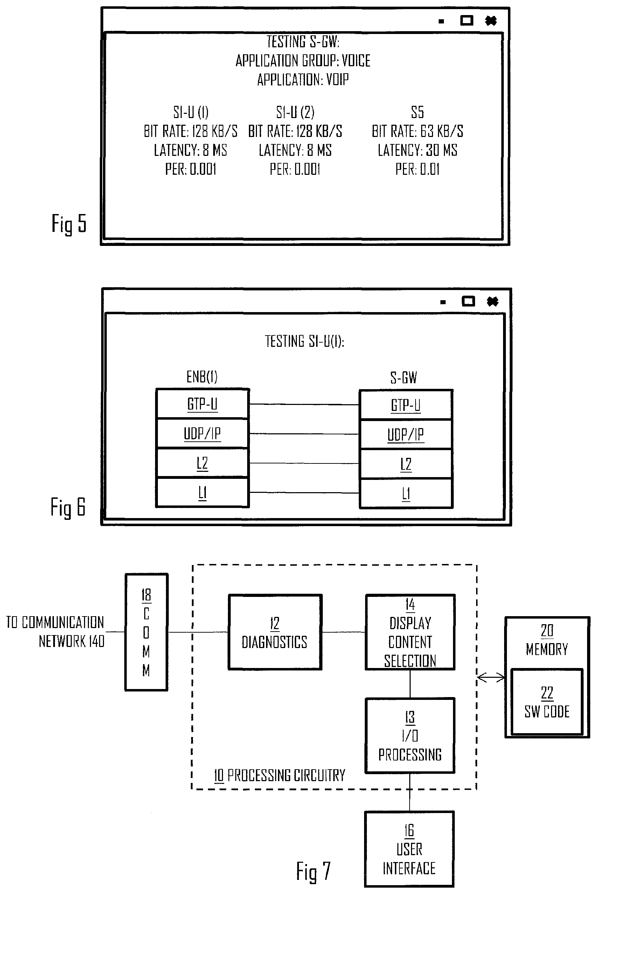

In another embodiment illustrated in Figure 5, the user selection input may indicate a plurality of network elements. This may be realized by the user clicking a plurality of display contents, e.g. a plurality of network elements or compressed application data of a plurality of network elements, while holding down a shift or a control key on a keyboard. The multiple selection input may trigger the network analysis tool 130 to provide an aggregated view illustrating simultaneously detailed application information of the plurality of selected network elements. The detailed application information may comprise the performance characteristics for the selected network elements and the selected application group or individual application. This display enables direct comparison between the selected network elements for the selected application or application group. Thus, it enables the operator to see if one of the selected network elements is a bottleneck for the selected application (group). For example, in the example of Figure 5, the S5 interface exhibits lower bit rates and higher latencies than the S1-U interfaces, so it may be a bottleneck of the communication system 140.

In yet another embodiment illustrated in Figure 6, the detailed application information may comprise the performance characteristics of the selected application group or application in the form of a protocol stack representing the protocol stack of the selected at least one network element. This enables monitoring the performance of the communication network with respect to the selected application (group) on multiple protocol levels. The detailed application information may comprise the performance characteristics on the multiple protocol levels. This enables the operator to detect whether a determined protocol layer is a bottleneck for the selected application (group).

With respect to the communication interfaces, the detailed application information may comprise the performance characteristics over the selected communication interface, e.g. bit rate, error rate, delay, and throughput. As a consequence, the network analysis tool may acquire the performance characteristics from the two or more network nodes connected by the communication interface.

With respect to the network nodes 110 to 118, the detailed application information may comprise performance characteristics as experienced by the selected network node, e.g. input bit rate, output bit rate, error rate in reception of traffic, and average processing delays (time from reception of data packet to its transmission onwards).

An embodiment provides an apparatus comprising at least one processor and at least one memory including a computer program code, wherein the at least one memory and the computer program code are configured, with the at least one processor, to cause the apparatus to carry out the process of Figure 2. The apparatus may thus be considered as means for carrying out the method.

Figure 7 illustrates an embodiment of such an apparatus. The apparatus may be a computer, e.g. a personal computer, a workstation, or a server. Referring to Figure 7, the apparatus may comprise the at least one processor in the form of a processing circuitry 10, the at least one memory 20 and the computer program code 22. The apparatus may further comprise a communication circuitry 18 comprising components enabling the connection to the communication network 140. The communication circuitry 18 may comprise a wired or wireless modem and any signal processing circuitries needed to realize the connection. The apparatus may further comprise or be connected to a user interface 16 comprising a display unit and an input device such as a keyboard and/or a mouse or another pointing device.

The processing circuitry 10 may comprise a diagnostics circuitry 12 configured to acquire information from the communication network 140 through the communication circuitry 18. The diagnostics circuitry 12 may communicate with one or more of the network elements, e.g. the network nodes 110 to 118, identify the network elements and the communication interfaces, and build the layout of the communication network. The diagnostics circuitry 12 may also receive from the network nodes 110 to 118 the application information comprising the above-described application information, e.g. applications transferring data through the network elements and their performance characteristics. The diagnostics circuitry 12 may then output the received data to a display content selection circuitry 14 configured to select the display content displayed to the operator. For example, if the operator has launched the network diagnostics tool and selected a main display screen, the display content selection circuitry 14 may select display content comprising the layout of the communication network 140 and the compressed application information. The display content selection circuitry 14 may then output the corresponding display content to an input/output (I/O) processing circuitry 13 configured to output the display content to the user interface 16.

The I/O processing circuitry 13 may be configured to monitor for any user input from the user interface 16. Upon detecting the user input, the I/O processing circuitry 13 may derive the type of the input. If the input is a selection input, the I/O processing circuitry 13 may determine the selected display content and forward corresponding information to the display content selection circuitry 14. The display content selection circuitry 14 may then select display content matching with the selection input, e.g. the detailed application information of selected one or more network elements according of any one of the above-described embodiments. The display content selection circuitry 14 may then output the corresponding display content to the I/O processing circuitry 13 to output the display content to the user interface 16.

As used in this application, the term 'circuitry' refers to all of the following: (a) hardware-only circuit implementations such as implementations in only analog and/or digital circuitry; (b) combinations of circuits and software and/or firmware, such as (as applicable): (i) a combination of processor(s) or processor cores; or (ii) portions of processor(s)/software including digital signal processor(s), software, and at least one memory that work together to cause an apparatus to perform specific functions; and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term "circuitry" would also cover an implementation of merely a processor (or multiple processors) or portion of a processor, e.g. one core of a multi-core processor, and its (or their) accompanying software and/or firmware. The term "circuitry" would also cover, for example and if applicable to the particular element, a baseband integrated circuit, an application-specific integrated circuit (ASIC), and/or a field-programmable grid array (FPGA) circuit for the apparatus according to an embodiment of the invention.

The processes or methods described in Figures 4 to 8 may also be carried out in the form of a computer process defined by a computer program. The computer program may be in source code form, object code form, or in some intermediate form, and it may be stored in some sort of carrier, which may be any entity or device capable of carrying the program. Such carriers include transitory and/or non-transitory computer media, e.g. a record medium, computer memory, read-only memory, electrical carrier signal, telecommunications signal, and software distribution package. Depending on the processing power needed, the computer program may be executed in a single electronic digital processing unit or it may be distributed amongst a number of processing units.

The present invention is applicable to cellular or mobile telecommunication systems defined above but also to other suitable telecommunication systems. The protocols used, the specifications of mobile telecommunication systems, their network elements and subscriber terminals, develop rapidly. Such development may require extra changes to the described embodiments. Therefore, all words and expressions should be interpreted broadly and they are intended to illustrate, not to restrict, the embodiment. It will be obvious to a person skilled in the art that, as technology advances, the inventive concept can be implemented in various ways. The invention and its embodiments are not limited to the examples described above but may vary within the scope of the claims.

## Claims

1. A method comprising:
outputting, in a network analysis tool, display content comprising a layout of the communication network comprising network elements in the form of a plurality of network nodes and a plurality of communication interfaces connecting the plurality of network nodes, the display content further comprising compressed application information associated with at least one of the network elements, wherein the compressed application information indicates what type of user application data traffic is currently transferred through said at least one of the network elements;
receiving an input to select at least one of the displayed network elements; and
outputting, as a response to the input, detailed application information of the selected at least one of the displayed network elements.

2. The method of claim 1, wherein the compressed application information associated with a network element is visually connected to the network element in the display content.

3. The method of claim 1 or 2, wherein the detailed application information specify at least one of a user application transferring data traffic through the selected network element and performance characteristics of the user application on at least one protocol layer.

4. The method of any preceding claim, further comprising:
receiving a user input to select an application or an application group of the display content; and
outputting display content comprising performance characteristics of the selected application or application group.

5. The method of any preceding claim, wherein the compressed application information comprises an application class by using quality-of-service based classification, and wherein the detailed application information comprises quality-of-service based performance characteristics.

6. The method of claim 5, wherein the application class comprises at least one of the following: video streaming application, voice application, real-time application, non-real-time application, file download application, file upload application.

7. An apparatus comprising:
at least one processor; and
at least one memory including a computer program code, wherein the at least one memory and the computer program code are configured, with the at least one processor, to cause the apparatus to:
output display content comprising a layout of the communication network comprising network elements in the form of a plurality of network nodes and a plurality of communication interfaces connecting the plurality of network nodes, the display content further comprising compressed application information associated with at least one of the network elements, wherein the compressed application information indicates what type of user application data traffic is currently transferred through said at least one of the network elements;
detect an input to select at least one of the displayed network elements; and
output, as a response to the input, detailed application information of the selected at least one of the displayed network elements.

8. The apparatus of claim 7, wherein the at least one memory and the computer program code are configured, with the at least one processor, to cause the apparatus to process the display content such that the compressed application information associated with a network element is visually connected to the network element in the display content.

9. The apparatus of claim 7 or 8, wherein the detailed application information specifies at least one user application transferring data traffic through the selected network element and/or performance characteristics of at least one user application on at least one protocol layer.

10. The apparatus of any preceding claim 7 to 9, wherein the at least one memory and the computer program code are configured, with the at least one processor, to cause the apparatus to:
detect a user input to select an application or an application group of the display content; and
output display content comprising performance characteristics of the selected application or application group.

11. A computer program product embodied on a distribution medium readable by a computer and comprising program instructions which, when loaded into a computer, execute the method according to any preceding claim 1 to 6.
